# EUROPEAN PATENT APPLICATION

(11) **EP 2 495 499 A2**
(43) Date of publication of application: **05.09.2012**
(21) Application number: 11174100.5
(22) Date of filing: 15.07.2011
(51) Int. Cl.: F24D 3/12, F24D 12/02, F24H 1/12, F24H 9/00

(54) **Electro-thermal heating system**

(30) Priority: 04.03.2011 US 64075; 04.03.2011 CA 2733302
(71) Applicant: King, Ray, Pickering ON L1X 2S9 (CA)
(72) Inventor: King, Ray, Pickering ON L1X 2S9 (CA)
(74) Representative: Fritzon, Rolf

(57) **Abstract**

An electro-thermal heating system comprising a substantially hollow housing having detachable upper and lower plates for covering and sealing top and bottom surfaces of the housing. The housing has an inlet and an outlet for a flow of coolant to enter into and leave the housing, and has openings defined therein, for insertion of electric heating elements therein to project into the housing and be in direct contact with the coolant to heat it. The inlet and the outlet can be interconnected with piping to form a closed fluid flow circuit. The housing is substantially circular, to circulate flow of the coolant in a circular manner within the housing, and a diameter of the inlet is greater than a diameter of the outlet, to keep coolant in the housing longer to heat it. A pump and a power source can be interconnected to the system to circulate the coolant in the closed fluid flow circuit.

## Description

This invention relates generally to a heating system, and more particularly to an improved electro-thermal heating system which is durable and reliable, that possesses easily removable or replaceable heating elements, and which can be easily installed in, for example, a home or garage.

### DESCRIPTION OF THE PRIOR ART

It is well known that, for example, furnaces can be used to heat spaces such as homes. Traditionally, such furnaces were oil furnaces. However, as the demand for oil has risen sharply in the last decade, the price has correspondingly risen sharply, reducing the ability of such furnaces to be economical to the home or business owner. Recently, gas-fired applications, using natural gas, have been much in demand for homeowners in economically heating their home. However, much as has occurred with oil, natural gas has also seen large price increases in the last couple of years, which has also reduced the economical viability of gas-fired applications.

It is also well known to heat homes or spaces using, for example, electrical baseboards, but, as hydro rates have risen quite sharply recently, and can be expected to continue upwardly in the future, these types of devices are not necessarily economical also. In addition, heating systems such as furnaces can require a large footprint, and take up an inordinate amount of space.

In adition, certain types of pre-heaters have utilized electrical elements internally positioned within the pre-heater, whereby coolant can be heated by an electrical element so as to heat an area. United States Patents Nos. 5,408,960 (Woytowich) and 4,770,134 (Foreman et al*)* are examples of such devices. However, these arrangements feature electrical elements that are internally positioned and firmly set within a tank or chamber, and do not allow for easy removal of the electrical element from the pre-heater without complete disassembly, or destruction, of the pre-heater, should maintenance or replacement of the electrical element be required. In such maintenance or replacement situations, the entire pre-heater would be required to be removed to access the internal electrical element, thereby making maintenance and replacement of such pre-heater components difficult and complicated.

What is required is an electro-thermal heating system which is very economical, and which can generate substantial amounts of heat to heat larger spaces, such as in a home or business. Thus, there is a need for an improved environmentally friendly electro-thermal heating system for heating a space which has a generally uncomplicated and simple design, which may be installed easily, and is durable and reliable, and which possesses easily removable or replaceable heating elements. Further there is a need for an electro-thermal heating system which possesses a minimal footprint, and which be utilized in a variety of applications, from heating a home to radiant floor heating. In this regard, the present invention substantially fulfills this need.

### SUMMARY OF THE INVENTION

It is an object of the present invention to provide an improved, environmentally friendly electro-thermal heating system which has a generally uncomplicated and simple design, which possesses a minimal footprint, and which has a housing with an inlet and outlet for permitting a flow of coolant therein, which can then be interconnected with piping to form a closed fluid flow circuit.

It is another object of the present invention to provide an improved electro-thermal heating system having a housing with openings defined therein whereby easily removable electric heating elements can be inserted to project into the housing and be in direct contact with the coolant to heat it.

It is another object of the present invention to provide an improved electro-thermal heating system wherein the housing is substantially circular, to circulate flow of the coolant in a circular manner within the housing, and wherein a diameter of the inlet is greater than a diameter of the outlet, so as to to temporarily inhibit and keep coolant in the housing longer to heat it in a faster and more efficient manner.

According to one aspect of the present invention, there is provided an electro-thermal heating system comprising a housing comprising at least one opening defined therein and having an inlet for permitting a flow of coolant into and throughout the housing and an outlet for permitting a transfer of heated coolant out of the housing, a diameter of the inlet being greater than a diameter of the outlet, the inlet and the outlet being constructed and arranged for interconnection with an inlet pipe and an outlet pipe, respectively, for forming a closed fluid flow circuit; at least one electric heating element constructed and arranged for insertion into the at least one opening and projecting into the housing whereby the at least one electric heating element is in direct contact with the coolant, the at least one electric heating element being removable without disassembly of the housing.

According to another aspect of the present invention, there is provided an electro-thermal heating system comprising a substantially circular and substantially hollow housing comprising at least one opening defined therein; an inlet for permitting a flow of coolant to enter into the housing, the housing being constructed and arranged to circulate the flow of the coolant in a circular manner within the housing;, an outlet for permitting a transfer of heated coolant out of the housing; a detachable upper plate for covering and sealing a top surface of the housing; a detachable lower plate for covering and sealing a bottom surface of the housing; and at least one electric heating element constructed and arranged for insertion into the at least one opening and projecting into the housing whereby the at least one electric heating element is in direct contact with the coolant, the at least one electric heating element being removable without disassembly of the housing; and wherein a diameter of the inlet is greater than a diameter of the outlet, the inlet and the outlet being constructed and arranged for interconnection with an inlet pipe and an outlet pipe, respectively, for forming a closed fluid flow circuit.

According to another aspect of the present invention, there is provided an electro-thermal heating system comprising a substantially circular and substantially hollow housing comprising at least one opening defined therein; an inlet for permitting a flow of coolant to enter into the housing, the housing being constructed and arranged to circulate the flow of the coolant in a circular manner within the housing; an outlet for permitting a transfer of heated coolant out of the housing, wherein a diameter of the inlet is greater than a diameter of the outlet, the inlet and the outlet being constructed and arranged for interconnection with an inlet pipe and an outlet pipe, respectively, for forming a closed fluid flow circuit, and wherein the inlet is positioned towards a lower surface of the housing and the outlet is positioned towards an upper surface of the housing; a detachable upper plate for covering and sealing a top surface of the housing; a detachable lower plate for covering and sealing a bottom surface of the housing; and at least one middle plate having a lesser surface area than the upper plate and the lower plate, for temporarily inhibiting the transfer of heated coolant out of the housing; at least one electric heating element constructed and arranged for insertion into the at least one opening and projecting into the housing whereby the at least one electric heating element is in direct contact with the coolant, the at least one electric heating element being removable without disassembly of the housing; a pump in communication with the heating system for continuously circulating the coolant throughout the closed fluid flow circuit; and a power source constructed and arranged for connection with the heating system, the power source supplying the at least one electric heating element and the pump with power.

The advantage of the present invention is that it provides an improved, environmentally friendly electro-thermal heating system which has a generally uncomplicated and simple design, which possesses a minimal footprint, and which has a housing which can circulate and heat a flow of coolant therein. The housing can then be interconnected with piping to form a closed fluid flow circuit, whereby heat from the heated coolant can be used to heat a space remote from the housing. Further, the system can be integrated with pumps, and connected to a power source, whereby the closed fluid flow circuit can be used to circulate and radiate heat in a variety of applications, such as radiant floor heating, home heating, and so forth.

Yet another advantage of the present invention is to provide an improved electro-thermal heating system having a housing with an inlet for permitting a flow of coolant into and throughout the housing and an outlet for permitting a transfer of heated coolant out of the housing, wherein a diameter of the inlet is greater than a diameter of the outlet so as to keep coolant in the housing longer to heat it, therefore heating the coolant in a faster and more efficient manner.

### BRIEF DESCRIPTION OF THE DRAWINGS

A preferred embodiment of the present invention is described below with reference to the accompanying drawings, in which:
**Figure 1** is a side perspective view of one embodiment of the housing of the electro-thermal heating system of the present invention, illustrating the upper, middle and lower plates for covering and sealing top and bottom surfaces of the housing;
**Figure 2** is a side perspective view of an embodiment of the electro-thermal heating system of the present invention;
**Figure 3** is a top view of an embodiment of the electro-thermal heating system of the present invention, illustrating the housing and the deatched upper plate for covering a top surface of the housing;
**Figure 4** is a side perspective view of a further embodiment of the electro-thermal heating system of the present invention, illustrating the upper, multiple middle and lower plates for covering and sealing top and bottom surfaces of the housing;
**Figure 5** is a side perspective view of a further embodiment of the electro-thermal heating system of the present invention, illustrating the system of the present invention in connection with a radiant flooring system and a furnace; and
**Figure 6** is a side perspective view of a further embodiment of the electro-thermal heating system of the present invention, illustrating the housing and an inter-connected second housing for containing further electric heating elements therein.

### DESCRIPTION OF THE PREFERRED EMBODIMENT

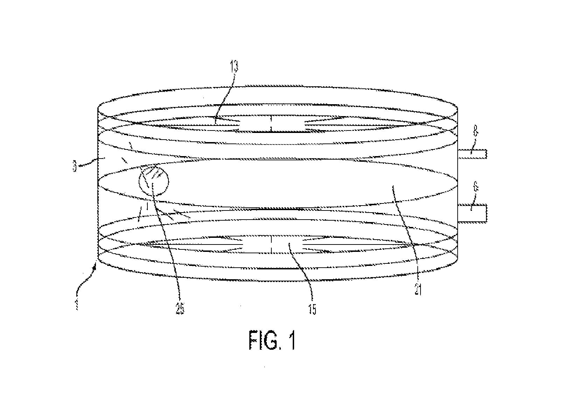

In overview of operation, as shown in **Figures 1** to **4****,** the present invention comprises an electro-thermal heating system **1** comprising a substantially hollow housing **3** having detachable upper **13** and lower **15** plates for covering and sealing top and bottom surfaces of the housing **3.** The housing **3** has an inlet **5** and an outlet **7** for a flow of coolant **4** to enter into and leave the housing **3,** and has openings **9** defined therein, for insertion of electric heating elements **11** therein to project into the housing **3** and be in direct contact with the coolant **4** to heat it. The inlet **5** and the outlet **7** can be interconnected with piping **(6,8)** to form a closed fluid flow circuit. A diameter of the inlet **5** is greater than a diameter of the outlet **7**, so as to to temporarily inhibit and keep coolant **4** in the housing **3** longer to heat it in a faster and more efficient manner.

Further, the housing can possess, in addition to the detachable upper **13** and lower **15** plates, one or more detachable middle plates present in the housing **3,** each of which can be of a reduced surface area, or have water inlet holes defined therethrough, with a view to further aiding in temporarily inhibiting and keep coolant **4** in the housing **3** longer to be heated by electric heating elements **11.** Radiator panels (not shown) can be connected to the closed fluid flow circuit to radiate the heat from the coolant **4** flowing in the circuit to a space (not shown) to be heated by the electro-thermal heating system **1.** Such a space could be, for example, a home, a room, an office, radiant flooring or a building. If desired, such generated heat can be circulated by means of a conventional fan or blower. A pump (not shown) and a power source (not shown) can be interconnected to the system **1** to circulate the coolant **4** in the closed fluid flow circuit.

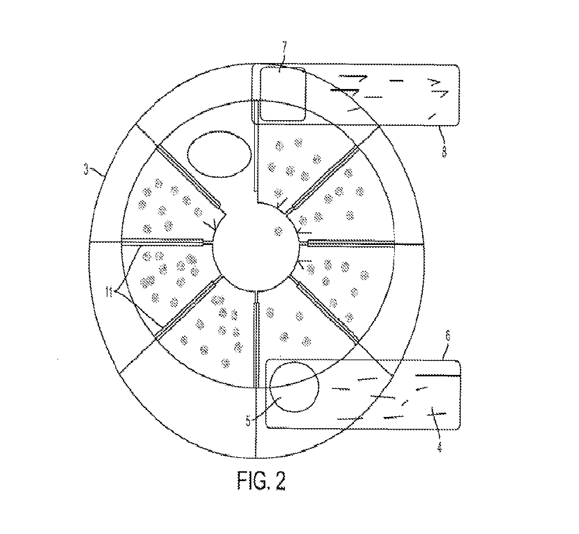

In terms of describing the individual components of the system in greater detail, and with reference to **Figure 2****,** the heating system of the present invention is designated in its entirety by the reference numeral **1.** With further reference to **Figures 1** **and** **2****,** there is shown an embodiment of the housing **3** of the electro-thermal heating system **1** of the present invention.

In an exemplary embodiment, the electro-thermal heating system **1** comprises a housing **3** through which coolant **4** may pass through through the housing **3,** by means of inlet **5.**

Preferably, the housing **3** is made of metal, though it is conceivable that other materials could also be utilized, as would be apparent to one skilled in the art. The size of the housing can be varied, such 7 inches wide by 2 inches high, or 4" by 3", for example only.

Further, the housing **3** possesses an outlet **7** for a flow of heated coolant **4** to leave the housing **3,** as hereinafter described. The inlet **5** and the outlet **7** are constructed and arranged for interconnection with piping to form a closed fluid flow circuit. With reference to **Figure 2****,** the inlet pipe, with coolant **4** flowing therethrough, can be seen as **"6",** and the outlet pipe, with heated coolant flowing therethrough leaving the housing, can be seen as **"8".** Once inlet pipe **6** and outlet pipe **8** are interconnected to the system **1,** a pump and a power source (each not shown) can be interconnected to the system to circulate the coolant **4** in the closed fluid flow circuit, and through the system **1,** it being understood that conventional power sources or pumps could be utilized. For example, in one embodiment, the power source can be an electrical type power source, or a power pack that can be plugged in by means of a power cord (not shown), though it is conceivable that, alternatively, other types of power sources could be utilized, such as solar power cells, A/C power, DC power pack, battery, wind generated power sources or the like, as would be apparent to one skilled in the art. It will be understood that the power source can be activated conventionally, or , for example, by a remote device (not shown), as would be understood by one skilled in the art.

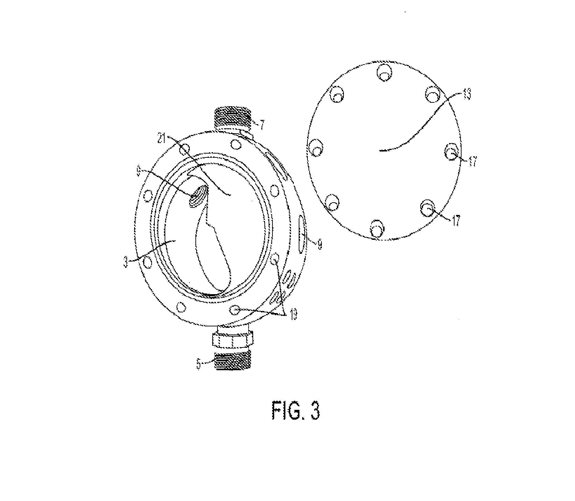

The housing **3,** with further reference to **Figure 3****,** has openings **9** defined therein, for insertion of electric heating elements **11** therein (shown in **Figure 2****)** to project inwardly into the housing **3** and be positioned so as to be in direct contact with the coolant **4** to heat it. The number of electric heating elements **11** which could be utilized could be varied, depending upon the application of the system, and the size requried of the system. For example, as few as two heating elements could be used, or up to sixteen, or more.

Preferably, the coolant **4** will be water, though it is conceivable that other fluids could be utilized, as would be apparent to one skilled in the art. Of course, electric heating elements 11 are connected to, and supplied with, power from the power source (not shown) for enabling the electric heating elements **11** to heat the coolant **4,** the coolant of course being circulated throughout the system by the pump. The electrical connection portion (not shown) of electric heating elements **11** can, as an example, be made of Inconel ™, it being understood that this refers to a family of austenitic nickel chromium-based super-alloys, which are typically used in high temperature applications. Common trade names for Inconel ™ include: Inconel 625 ™, Chronin 625 ™, Altemp 625 ™, Haynes 625 ™, Nickelvac 625 ™ and Nicrofer 6020 ™, for example.

The housing **3,** again with reference to **Figure 1****,** is substantially hollow, and has a detachable upper plate **13** and detachable lower plate **15** for covering and sealing top and bottom surfaces of the housing **3.** Further, the housing **3,** as can be seen, in an exemplary embodiment, is substantially circular, so as to circulate the flow of coolant **4** entering into the housing **3** through inlet **5** in a circular manner within the housing **3.**

With reference to **Figure 3****,** it can be seen that the upper plate **13** has securing holes **17,** through which the plates can be secured (such as with screws or the like) to the housing to cover the top and bottom surfaces thereof. Though not shown in **Figure 3****,** it will also be understood that lower plate **15** will likewise have securing holes **17** thereon. The upper surface of the housing **3** will likewise have securing regions **19** defined therein for receiving screws or securing means placed through securing holes **17.** Preferably, any of the electric heating elements **11** are easily removable and replaceable if required from the housing **3,** either by removing them from openings **9** in the housing **3,** or, alternatively, by detaching the upper plate **13** and lower plate **15** from the housing **3** and removing the electric heating elements **11.**

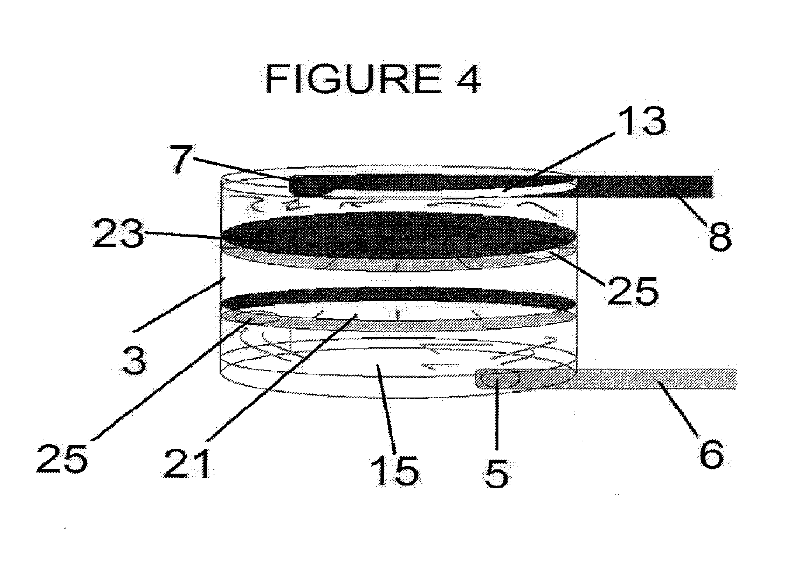

In an exemplary embodiment, a diameter of the inlet **5** is greater than a diameter of the outlet **7 ,** with a view to temporarily inhibiting the release of coolant **4** from the housing **3,** through outlet **7,** thus keeping coolant **4** in the housing **3** longer so as to be heated by electric heating elements 11. In addition, with reference to **Figure 3****,** the housing **3** possesses one or more detachable middle **21** plates, which can be positioned within the interior of the housing **3.** the housing **3.** As can be seen in **Figure 3****,** the middle plate **21** is of a reduced surface area, being essentially cut in half as compared to upper plate **13,** with a view to further aiding in temporarily inhibiting and keep coolant **4** in the housing **3** longer to be heated by electric heating elements **11.** Or, with reference to **Figure 4****,** which illustrates the housing **3** having two middle plates **(21,23),** these middle plates can be substantially solid, but each possessing at least one water inlet hole **25** defined therethrough, again, with a view to further aiding in temporarily inhibiting and keep coolant **4** in the housing **3** longer to be heated by electric heating elements **11.** With this in mind, and with reference to **Figures 1** and **4****,** the inlet **5** is positioned towards a lower surface of the housing **3** and the outlet **7** is positioned towards an upper surface of the housing **3** to further aid in temporarily inhibiting and keep coolant **4** in the housing **3** longer to be heated by electric heating elements **11.**

As noted previously, radiator panels (not shown) can be connected to the closed fluid flow circuit to radiate the heat from the coolant **4** flowing in the circuit to a space (not shown) to be heated by the electro-thermal heating system **1.** Such a space could be, for example, a home, a room, an office, radiant flooring or a building, or other applications, as could be contemplated by one skilled in the art. If desired, such generated heat can be circulated by means of a conventional fan or blower.

The electro-thermal heating system can be activated by a remote device (not shown) by a user, whereby the power source can be activated to heat the electric heating elements **11,** and the interconnected system, remotely from a distance, and this heat can then be transferred by way of the heat emitting radiator panels or the like (not shown) into the space to be heated.

In another alternative embodiment of the present invention (not shown), coolant can be omitted, and dry heat, provided from the electric heating elements **11,** can be utilized. In this embodiment (not shown) the housing **3** would preferably have an air passageway extending therethrough for passage of air through the housing **3.** Electric heating elements would be inserted and mounted into the openings, the heating so as to project into the housing whereby the electric heating elements are in direct contact with air in the air passageway. A power source in communication with the electro-thermal heating system would supply the electric heating elements with power, for enabling the electric heating elements to heat the air. An air blower, for example, or other such device, could then direct the heated air device would direct heat to an area external to the electro-thermal heating system, such as a house or other enclosed structure, the air blower being supplied with power from the power source.

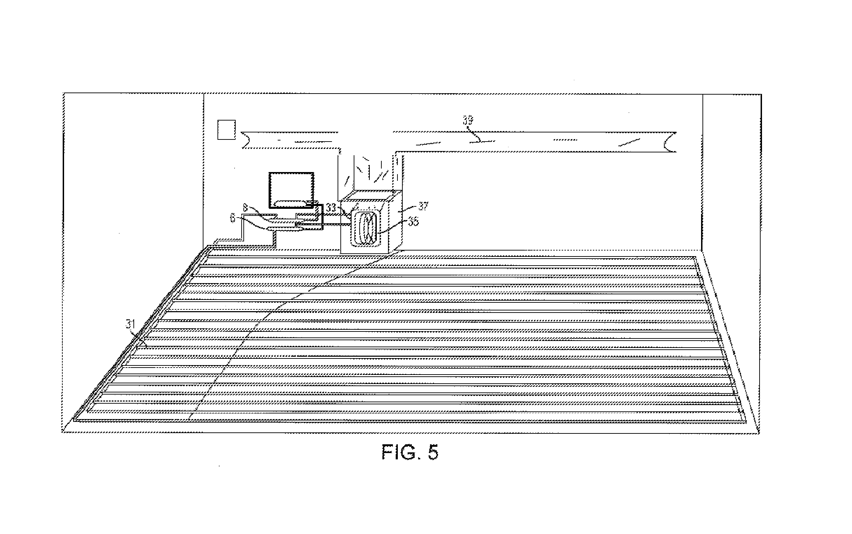

In another alternative embodiment of the present invention, shown in **Figure 5**, it can be seen that inlet pipe **6** and outlet pipe **8** can be interconnected at one ends thereof to, as an example, a radiant floor heating system **31**, means for doing so which would be apparent to one skilled in the art, with a view to providing in floor radiant heating. At opposite ends thereof, as at **"33",** the inlet pipe **6** and outlet pipe **8** of the system can be interconnected to communicate with a heating coil **35** of a home furance **37,** with heated coolant from the housing of the present invention being used to heat the heating coil **35,** which can then then be circulated by means of conventional air handler/blower (not shown) to circulate the heated air through the ductwork of a home.

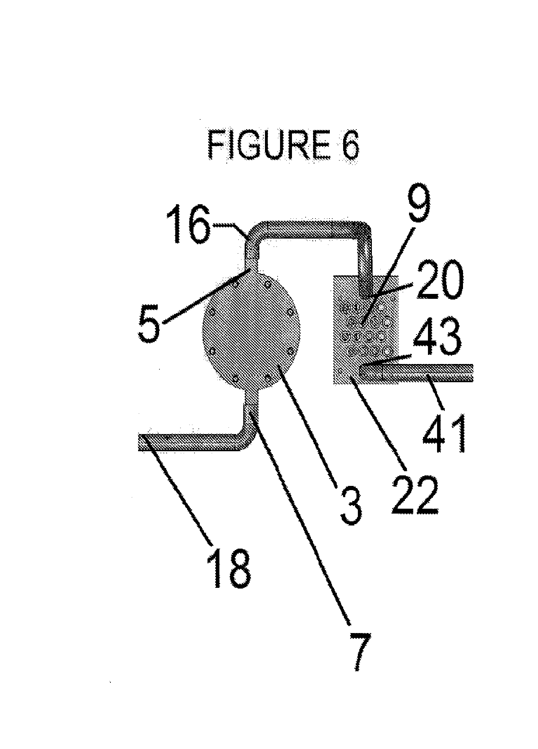

In a further embodiment of the present invention, as shown in **Figure 6****,** the electro-thermal heating system of the present invention is as described in **Figures 1** to **5****,** and comprises the substantially hollow housing **3** as previously shown in **Figures 1** to **5****.** The housing **3** has an inlet **5** and an outlet 7 for a flow of coolant to enter into and leave the housing **3,** and, of course, has openings defined therein, for insertion of electric heating elements (not shown) therein to project into the housing **3** and be in direct contact with the coolant **4** to heat it.

In this further embodiment of the electro-thermal heating system of the present invention, a second housing **22** is interconnected to the housing **3.** The second housing **22** contains a plurality of openings **9** therein for insertion of electric heating elements (not shown) to project inwardly into the housing **22** and be positioned so as to be in direct contact with coolant flowing into the second housing **22,** by means of pipe **41,** to heat it. Again, the number of electric heating elements which could be utilized in the second housing **22** could be varied, depending upon the application of the system, and the size requried of the system. For example, as few as two heating elements could be used, or up to sixteen, or more.

In the embodiment shown in **Figure 6**, the second housing **22** is shown without a top portion, so as to permit a view of the openings **9** on the interior of the housing **22** for insertion of the electric heating elements; however, in real-life operation, this second housing **22** would also be sealed, much like housing **3.**

As with the embodiment of the housing **3** shown in **Figures 1** to **5****,** a diameter of the inlet 43 of the second housing **22** is greater than a diameter of the outlet **20,** with a view to temporarily inhibiting the release of coolant from the second housing **22,** through outlet **20,** thus keeping coolant in the second housing **22** longer so as to be heated by the electric heating elements.

The inlet **5** and the outlet **7** of the housing **3** can be interconnected with the other components of the system by an inlet pipe **16,** (which connects the inlet **5** of the housing **3** and the outlet **20** of the second housing **22)** and an outlet pipe **18** (for allowing heated coolant to flow therethrough and leave the housing 3) to form a closed fluid flow circuit. Of course, coolant flows into the second housing **22** by way of inlet **43** through pipe **41,** where it is heated by the electric heating elements in the second housing **22.** Heated coolant then leaves the second housing **22** by means of outlet **20,** and enters inlet pipe **16** to then enter the inlet **5** of the housing **3,** where it is then further heated by the electric heating elements in the housing **3.** After heating, heated coolant then exits housing **3** through outlet pipe **18** to flow through the closed fluid flow circuit.

In an alternative embodiment, the pre-heater can further comprise a thermostatic control (not shown) in association with the electric heating elements **11** and the coolant in the housing **3,** wherein the thermostatic control is adapted to deactivate the electric heating elements **11** when a temperature of the coolant exceeds a pre-determined level. Further, the thermostatic control can also thus turn the electric heating elements **11** on when a temperature of the coolant falls below a pre-determined level.

The present invention has been described herein with regard to preferred embodiments. However, it will be obvious to persons skilled in the art that a number of variations and modifications can be made without departing from the scope of the invention as described herein.

## Claims

1. An electro-thermal heating system comprising:
a substantially circular and substantially hollow housing comprising:
at least one opening defined therein;
an inlet for permitting a flow of coolant to enter into the housing, the housing being constructed and arranged to circulate the flow of the coolant in a circular manner within the housing;
an outlet for permitting a transfer of heated coolant out of the housing;
a detachable upper plate for covering and sealing a top surface of the housing;
a detachable lower plate for covering and sealing a bottom surface of the housing; and
at least one electric heating element constructed and arranged for insertion into the at least one opening and projecting into the housing whereby the at least one electric heating element is in direct contact with the coolant, the at least one electric heating element being removable without disassembly of the housing; and
wherein a diameter of the inlet is greater than a diameter of the outlet, the inlet and the outlet being constructed and arranged for interconnection with an inlet pipe and an outlet pipe, respectively, for forming a closed fluid flow circuit.

2. The electro-thermal heating system of claim 1, wherein the inlet pipe and the outlet pipe are interconnected at ends thereof to form the closed fluid flow circuit.

3. The electro-thermal heating system of claim 1, wherein the housing is substantially circular.

4. The electro-thermal heating system of claim 1, wherein the housing is substantially hollow.

5. The electro-thermal heating system of claim 1, wherein the system further comprises a pump in communication with the heating system for continuously circulating the coolant through the closed fluid flow circuit.

6. The electro-thermal heating system of claim 5, wherein the system further comprises a power source constructed and arranged for connection with the heating system, the power source supplying the at least one electric heating element and the pump with power.

7. The electro-thermal heating system of claim 1, wherein the housing comprises a plurality of openings defined therein, each of the plurality of openings having an electric heating element inserted therein.

8. The electro-thermal heating system of any one of claims 1 to 7, wherein the housing further comprises a detachable upper plate for covering and sealing a top surface of the housing, and a detachable lower plate for covering and sealing a bottom surface of the housing.

9. The electro-thermal heating system of of any one of claims 1 to 8, wherein the housing further comprises at least one middle plate having a lesser surface area than the upper plate and the lower plate, for temporarily inhibiting the transfer of heated coolant out of the housing.

10. The electro-thermal heating system of claim 1, wherein the system further comprises a thermostatic control in association with the at least one electric heating element and the coolant in the housing, wherein the thermostatic control is adapted to turn the at least one electric heating element off when a temperature of the coolant exceeds a pre-determined level.

11. The electro-thermal heating system of claim 10, wherein the thermostatic control is adapted to turn the at least one electric heating element on when a temperature of the coolant falls below a pre-determined level.

12. The electro-thermal heating system of any one of claims 1 to 11, wherein the system further comprises a second housing interconnected with the closed fluid flow circuit.

13. The electro-thermal heating system of claim 12, wherein the second housing further comprises:
at least one opening defined therein;
an inlet for permitting a flow of coolant to enter into the second housing, the second housing being constructedand arranged to circulate the flow of the coolant in a circular manner within the second housing;
an outlet for permitting a transfer of heated coolant out of the second housing;
a detachable upper plate for covering and sealing a top surface of the second housing;
a detachable lower plate for covering and sealing a bottom surface of the second housing; and
at least one electric heating element constructed and arranged for insertion into the at least one opening and projecting into the second housing whereby the at least one electric heating element is in direct contact with the coolant, the at least one electric heating element being removable without disassembly of the second housing; and
wherein a diameter of the inlet is greater than a diameter of the outlet, the outlet of the second housing being constructed and arranged for interconnection with the inlet pipe of the housing and the inlet of the second housing being constructed and arranged for interconnection with a second inlet pipe, respectively, for interconnecting with the closed fluid flow circuit.

14. The electro-thermal heating system of claims 12 or 13, wherein the second housing further comprises a plurality of openings defined therein, each of the plurality of openings having an electric heating element inserted therein.
